# EUROPEAN PATENT APPLICATION

(11) **EP 2 175 580 A1**
(43) Date of publication of application: **14.04.2010**
(21) Application number: 08166514.3
(22) Date of filing: 13.10.2008
(51) Int. Cl.: H04K 1/00

(54) **Encryption method for a wireless headset, and wireless headset**

(71) Applicant: Adeya SA, 1227 Carouge (CH)
(72) Inventor: Renouard, Cédric, 1292, Genève (CH)
(74) Representative: P&TS Patents & Technology Surveys SA

(57) **Abstract**

A wireless headset comprising:
a microphone;
a loudspeaker;
a wireless transmitter for wireless transmission of signals with a remote device;
a memory for storing a one-time encryption key;
an encrypting part for encrypting voice signals before said wireless transmission by Boolean combinations between said voice signal and said one-time encryption key (K), each bit of said one-time encryption key is used at most one time.

## Description

### Field of the invention

The present invention concerns an encryption and decryption method for a wireless headset, and a corresponding wireless headset.

### Description of related art

Battery powered wireless communications to be "wired" from almost anywhere in the world. Cellular telephones, wireless local area networks, personal digital assistants (PDAs) with radio frequency (RF) interfaces, laptop computers and other devices offer users the ability to establish voice communications over various public networks, such as POTS (plain old telephony system), cellular networks, WLAN or Internet. Moreover, such devices very often communicate with other devices in the vicinity, using various standard of local wireless communications. One example of such standard for wireless networking which has been widely accepted is the Specification of the Bluetooth System ("Bluetooth Specification").

The Bluetooth Specification enables the creation of small personal area networks (PAN's) where the typical operating range of a device is 20 meters or less.

The Bluetooth Specification supports voice and data communications between Bluetooth enabled devices. When a pair of Bluetooth devices supports voice communication, the voice communications must be wirelessly supported in a continuous fashion so that carried voice signals are of an acceptable quality. One popular use of Bluetooth couples wireless headset(s) with cellular telephone(s), personal computer(s), and laptop(s), etc.

The Bluetooth specification uses various layers for data encryption and other security measures, such as Personal Identification Numbers, 128-bit based data encryption, fast frequency hopping modulation technique and other measures for preventing an eavesdropper to access the transmitted voice or data. Those safety measures are considered sufficient for most applications, especially since the transmission range is usually very limited.

Nevertheless, many demanding applications or users require an even higher level of confidentiality, including encryption based on algorithms that cannot be broken even with brute-force attacks. For those demanding users and applications, the Bluetooth wireless transmission is sometimes the weakest link in the whole transmission chain, so that many users still rely on wired transmission between the headset and the handset or laptop, despite the lack of convenience and ergonomy.

In addition, the Bluetooth security layers only secure the transmission over the wireless channel between the wireless headset and the handset. The voice stream is then decrypted in the handset, and possibly re-encrypted with a suitable encryption application in the handset before transmission over another network such as a cellular network. This opens the door to possible eavesdropper who may try to take control over the handset, using for example virus, Trojans or other advanced technologies for intercepting the communication in the handset before re-encryption.

### Brief summary of the invention

There is therefore a need in the prior art for an improved confidentiality between the wireless headset and the handset. There is also a need for a wireless headset which is able to encrypt data and voice communications with an algorithm which is difficult or impossible to break, even with brute force attacks. Furthermore, there is a need for end-to-end encryption between the wireless headset and the recipient of the phone communication, without transmission or storing of unencrypted voice signals in the handset.

According to the invention, these aims are achieved by means of a wireless headset comprising:
a microphone;
a loudspeaker;
a wireless transmitter for wireless transmission of signals with a remote device;
a memory for storing a one-time encryption key;
an encrypting part for encrypting voice signals before said wireless transmission by Boolean combinations between said voice signal and said one-time encryption key (K), each bit of said one-time encryption key being used at most one time.

The use of an encrypting part in the wireless headset - in addition to the encryption module or layer according to the wireless transmission standard, such as Bluetooth - offers an improved confidentiality and security.

The encryption key is preferably shared with the recipient of the communication only, so that decryption in the remote device is not easily possible.

The use of a one time encryption key - instead of a conventional symmetric or asymmetric key used for several communications - offers an additional security, since an eavesdropper who knows or possesses several bits of this key cannot use this knowledge for decrypting subsequent portions of the voice message. Miniature removable Flash memory cards, such as SD cards, only since very recently have a sufficient stoarge capacity for the extremely long and numerous keys used in one aspect of the invention.

In one aspect, each bit of the encrypted signal is computed by performing an exclusive-or of the initial unencrypted bit with the corresponding bit of the encryption key. Table 1 illustrates the value of an encoded bit for each possible combination of the initial bit and of the corresponding bit of the encryption key:

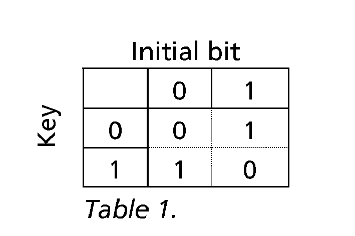

Decryption may then be carried out using a one-time key having a length greater than or equal to the length of the voice signal to decrypt. The decrypted digital voice signal is retrieved by computing a Boolean operation between each bit of the encrypted voice signal and the corresponding bit of the key.

In an example, the same key (conveniently called encryption key) is used for encryption and decryption. In this case, the bits of the digital signal are retrieved in the receiver by performing an exclusive-OR between each encoded bit and the corresponding bit of the key, as shown by Table 2:

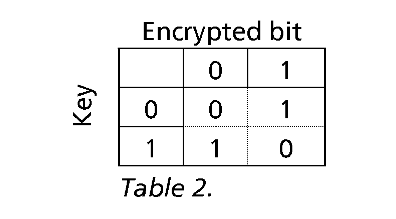

Other Boolean functions using the same or different keys can be used for encryption or decryption.

This method has the advantage of encrypting the successive bits of the digital voice signal one after another, as a function of the corresponding bit of the encryption and decryption key. The encryption is independent of the value of other bits of the signal or of other positions of the key. The encryption can thus be performed in real time, immediately after obtaining each bit, without any need for buffering or delaying the signal.

This method has the advantage of being demonstrably tamper-proof. The value of each encrypted bit depends only on the corresponding unencrypted bit and on the corresponding bit of the encryption key. The knowledge of other encrypted bits or of other bits of the encryption keys is of no use for decrypting a particular bit. It is possible to show mathematically that this encryption scheme is absolutely impossible to break with brute force attacks.

### Brief Description of the Drawings

The invention will be better understood with the aid of the description of an embodiment given by way of example and illustrated by the figures, in which:
Fig. 1 shows a view of a system comprising a wireless headset, a handset and a basis station of a cellular network.
Fig. 2 shows a schematic bloc-diagram of a wireless headset according to the invention.
Fig. 3 shows a view of a coding device according to an aspect of the invention.

### Detailed description of possible embodiments of the Invention

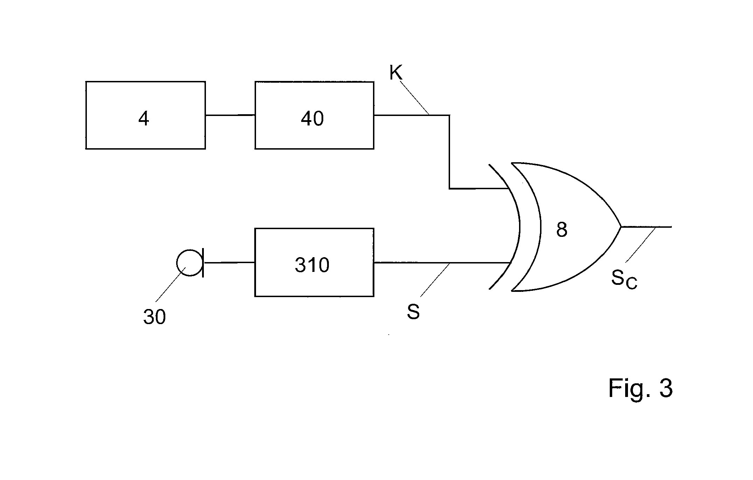

Figure 3 shows a view of an encrypting part for encrypting outgoing voice signals in a wireless headset according to an embodiment of the invention. The illustrated device comprises a memory 4 for storing one or several one-time encryption key. The memory is preferably a removable Flash memory, for example in a CompactFlash, MemoryStick, USB key, etc. or preferably SD format. Other kind of removable memories, including optical or magnetic disks, read-only memories, EPROM, EEPROM, RFID tags, barcodes, or non removable memories, may also be used as long as they have a sufficient capacity for storing one encryption/decryption bit for each bit transmitted/received. The wireless headset preferably further comprises an interface 40 for the memory 4, for example a mechanical and electrical interface for a removable Flash memory card. The interface 40 may also comprise a circuit or processor for serially delivering selected bits of a one time key K from a desired portion of memory 4.

The device also comprises means for obtaining a voice signal, for example a microphone 30. The voice signal is digitally converted and/or otherwise coded by a codec 310 using a suitable analog-to-digital converter. Various digital signal processing, such as band-pass filtering, noise removal etc may be performed by the codec 310 and/or by a suitable circuit, for example a processor (not shown) connected to this codec. The codec 310 delivers a digital, still unencrypted digital voice signal S at its output.

The encryption of the digital voice signal S output by the coded 310 is performed by a Boolean circuit 8, in this example a Boolean gate, for example a XOR gate. The Boolean circuit 8 performs a Boolean operation between each successive bit of the voice digital signal and the corresponding bit of the key retrieved from memory 4. For example, the first bit of the digital voice signal S is combined by the gate 8 with the first bit of the encryption key, the second bit of the signal with the second bit of the key, etc., up to the n^{th} bit of the signal s combined with the n^{th} bit of the key.

The circuit may comprise synchronization elements, not shown, including for example flip-flops, for synchronizing the reading of the successive bits from the memory 4 with the stream of bits output by the coding circuit 6.

Other possible implementations may include for example software based combinations of bits from the digital voice signal with corresponding bits of the key, using for example a microprocessor with suitable software code portions for retrieving the signal S, the bits Ki from the selected key K, and for performing the Boolean combination. In one example, a microprocessor already available in the wireless headset is used for this purpose.

Other circuits, such as Asics, microprocessor, digital signal processors (DSP) and/or FPGA-based Boolean modules may also be used for combining the voice signal S and the key K.

Furthermore, it is also possible to combine several bits, for example one byte, in a single operation, using for example several Boolean circuits 8 in parallel, or a suitable software function.

The Boolean circuit 8 outputs a coded signal Sc in which each bit depends on one bit of the unencrypted signal S and on the corresponding bit of the encryption key K. The XOR-combination performed by the gate 8 makes it impossible to retrieve the value of a bit of S without knowing the corresponding bit of the key.

The successive bits K₁, K₂, .., Kᵢ, ..., Kₙ read from the key K in memory 4 are marked as used after encryption, and not used for coding subsequent bits of the voice signal. In one example, the marking may be made by writing into an additional memory portion, for example a permanent or semi-permanent memory portion 330 of a microcontroller 33 within the headset, the address of the last used bit of the encryption key K, or the address of the next bit to use, or the address of all bits or sequences of bits which have been used for encryption.

Each bit Kᵢ of the key is thus used only once. The length n of the key 4 must thus be equal or longer than the signal S to encrypt. In an embodiment, the bits Kᵢ of the key K are organized in groups with more than one bit in each group, for example in bytes. Each group is marked as used once at least one bit of the group has been used in a communication. If the bits of the key K are used in a sequence, marking may be done by updating a pointer to the next available bit or group of bits; the pointer may be stored in each device, or in the memory 4. In another embodiment, the key K is stored as a data in a file or as one or several records in a database, and the bits Kᵢ of the key that have been used are deleted from the file or database after use.

As already mentioned, encryption (and decryption) with a one time encryption key may also be performed by using suitable software code portions for reading bits from a memory 4 and making Boolean combinations. For example, a suitable software code can be used for reading successive bit, or sequences of bits, from the voice stream and from the removable memory 4, and for combining those bits using a XOR-function, on any other suitable function.

Decryption may be performed with a similar circuit or module. In this case, decryption is performed for example by imputing an encrypted signal Sc (instead of a voice signal) to the Boolean gate 8, in replacement of the digital voice signal S. The wireless headset preferably comprises two Boolean circuits 8, one for encrypting outgoing voice signals S, and the other one for decrypting incoming encrypted Sc. The two gates used for encryption and decryption may use the same memory 4 for retrieving the key K, or different memories. It is also possible to use different positions of the same key for encryption and decryption, or different keys. Again, decryption may also be performed with suitable software code portions for combining each bit of the received encrypted voice signal with a corresponding bit from the key in the removable memory.

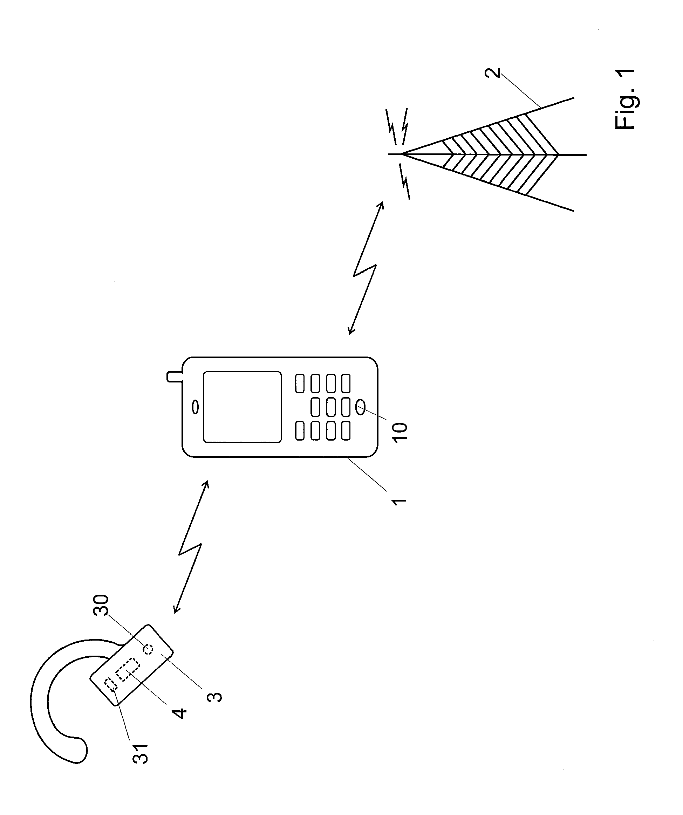

Fig. 1 illustrates a system comprising a wireless headset 3, a handset 1 and a public network, for example a cellular network of which only a basis station 2 is schematically illustrated. The wireless headset 3 is advantageously battery powered and of the earpiece type, for example an earbud-type or earclip type headset. It includes a removable memory 4 and an encrypting part. The encrypting part may include for example a circuit corresponding or equivalent to the circuit of FIG. 3 or a functionally equivalent software code portion executed by a microprocessor 30 for performing a Boolean combination between each bit of the voice signal and each corresponding bit of the key. The wireless headset 3 preferably also comprises a decrypting part, for example a dedicated circuit or a software code portion, for decrypting incoming voice streams encrypted with a one time password.

The wireless headset preferably also comprises a decrypting part, for example as a dedicated hardware circuit and/or as a software code portion, for decrypting with a key in memory 4 voice signals encrypted by another remote device (not shown).

The wireless headset 3 also comprises a microphone 30 for recording the voice of the user, and a loudspeaker 31 for delivering voice signals, including decrypted voice signals received from a foreign communication partner. The wireless headset thus encrypts voice recorded with the microphone 30 of the headset, and decrypts voice delivered by the loudspeaker 31, so that already the air interface between the wireless headset and the handset 1 is protected.

In a typical setting, the encrypted voice signal is transmitted by the wireless headset to the handset 1 which forwards it to the basis station 2 of the public network. The encrypted signal is then received by a remote recipient who can decrypt it by using a copy of the key in the memory 4, or by information from which such a copy can be derived. In the reverse direction, incoming voice signals are encrypted by a remote partner using a one-time encryption key, transmitted through the public network 2 and the handset 1 to the wireless headset 3, and decrypted by the decrypting part of the headset before restitution with the loudspeaker 31.

Some portions of the whole transmission path between the wireless headset 3 and the remote partner may be additionally encrypted with an additional encryption algorithm. For example, the Bluetooth interface between headset 3 and handset 1 may be encrypted according to the Bluetooth encryption standard. The air interface between the handset 1 and the basis station 2 may also be encrypted by using suitable encryption specifications of the cellular network. Those encryption methods are used in addition to the encryption of the voice signal using the one time encryption key.

This setting allows end-to-end encrypted channel between the wireless headset 3 and a remote partner, so that even a third party who could take control over the handset 1 or over the cellular network 2 cannot decrypt the transmitted voice signals. The wireless headset 3 of the invention could however also be used for other applications in which a secure channel is only built between the wireless headset 3 and the handset 1, or between the headset 3 and a device or system within the network 2 for example.

In any case, confidentiality of the phone communication is ensured by encrypting at the sending side each bit Sᵢ of the digital voice signal with a corresponding bit K_{AB,i} of a key K_{AB}. The key K_{AB} is shared by all parties A, B, to the phone communication, so that decryption of the received signal at the recipient side is performed by using the key used by the sender.

In this setting, each party i must share at least one key K_{i,j} for each party j with which he wants to encrypt voice communications. As the keys may be very long - at least as long as the voice signals to encrypt - and as they are used only once, the number of keys that are required, and the size of the memory 4 for storing those keys, are very large. Furthermore, each party can only encrypt and decrypt voice communications with other parties sharing a common, still unused key.

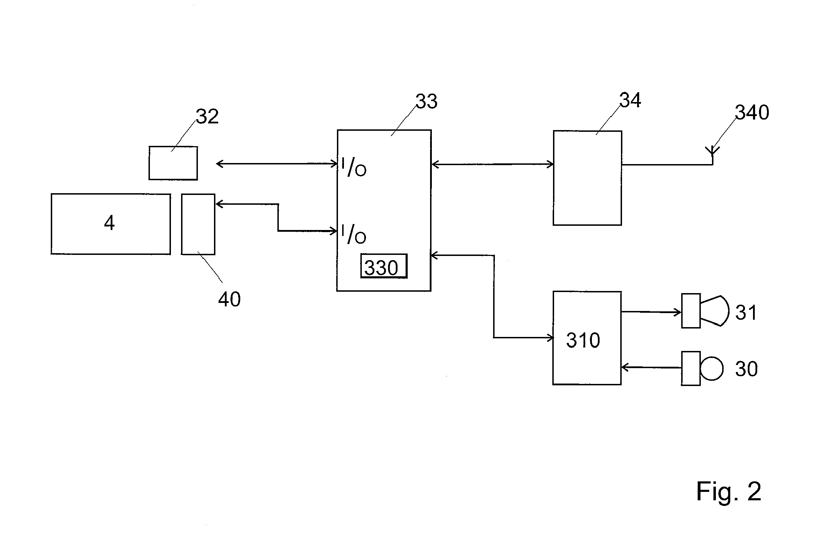

FIG. 2 schematically illustrates various components of a wireless headset. The illustrated embodiment comprises a microcontroller 33 with an internal and/or external memory 330, for example a semi-permanent Flash memory and/or a RAM. The microcontroller can be a general purpose microcontroller or microprocessor, a digital signal processor (DSP), and/or an assembly of several of those components. It executes software code portions, including software code portions stored in memory 330, for controlling the functioning of the headset 3. The software code portions in memory 330 may include for example software modules for encrypting and/or decrypting signals using a one time password, as explained. The memory 330 may also store the next address of the removable memory 4 from which the encrypting/decrypting key should be read.

The wireless headset 3 further comprises a wireless transmitter 34 for wireless communicating with a remote device, for example with a handset 1. In this context, "remote" means within the range of the wireless transmitter. In one embodiment, the wireless transmitter operates according to the Bluetooth specifications and has a range of a few meters, typically less than 100 meters or even less than 10 meters. A radiofrequency antenna 340 is connected to the wireless transmitter for sending and receiving radio signals. The transmitter 34 may comprise a radio-frequency part as well as, possibly, a digital part for processing the signals to transmit and/or to receive, wherein this processing may also comprise encrypting, decrypting and/or authenticating according to the Bluetooth specifications. Other type of wireless transmitters may be used, including for example NFC transmitters (Near Field Communication), WLAN transmitters, etc. may b e used in the wireless headset of the invention.

The circuit of FIG. 3 further comprises a codec 310 for converting analog voice signals delivered by the microphone 30 into digital signals sent to the microcontroller, and for converting digital voice signals processed by the microcontroller 33 into analog signals for the loudspeaker 31. The codec may also include suitable filter and signal processing means. Input means 32, such as for example haptic means including buttons or other control organs, and/or output means, including for example visual output means such as LEDs, displays, etc may also be controlled by the microcontroller 33.

The wireless headset 3 further includes an interface 40 for a removable memory 4, for example a Flash memory, for storing the encryption and/or decryption key, as well as other parameters. The memory 4 may be for example a SD, Memory Stick, CompactFlash or USB memory removably connected to the wireless headset.

In all embodiments of the invention described so far, confidentiality is based on keys shared by both communicating parties for encrypting voice signals. The keys are preferably distributed on a data medium, for example a Flash memory. Access to the key stored in the data medium may require authentication of the user, for example using a password or biometric authentication means. In this case, the wireless headset may include user authentication means, for example means for entering and checking a password, or a biometric control module, such as a fingerprint reading module or a speaker authentication module based on speech recognition technology.

In addition, the key stored in the medium may be encrypted with another algorithm, such as DESS or AES, to prevent unwanted copying or reading during transmission to the parties. DRM (digital right mechanism) may also be used to prevent reading of the keys in unauthorized devices, to prevent copying of the key, or multiple use of the key. It is also possible within the frame of the invention to distribute keys over a telecommunication network, for example in the air.

If at least one user has several keys - for example keys corresponding to different communication partners - it may be necessary to define between the parties which of the keys, or which position of a single key, will be used for encrypting and decrypting the subsequent voice communication. Agreement on the key to use for encryption and decryption at each side may be found during establishment or initial phase of the voice communication. In one embodiment, this information is exchanged vocally by the users who select one key, or pair of keys, among several available keys; the identification of the selected key or pair of keys can then be entered by the users on a keypad or keyboard of their device, and used for encrypting the rest of the communication, or parts of the communication. In another preferred embodiment, the identification of the key or keys is automatically transmitted over a signalization channel, or as DTMF commands, between different parties.

As already mentioned, the encryption and decryption method requires long keys that are used only once. When a key in the memory has been entirely used, the wireless headset may be arranged for interrupting the conversation in order to avoid any confidentiality breach. In another embodiment, the conversation may continue but is protected with another algorithm based on a shorter symmetric or asymmetric key; both parties are preferably informed, possibly with an audio and/or display message, that the key has been entirely used and that the communication is only protected with a weaker protection algorithm. In an embodiment, a message that the key has been used is automatically sent for example to a central server, and a new key is automatically generated and sent to both users.

Moreover, it is also possible to use another encryption/decryption algorithm based on symmetric/asymmetric key for double encrypting the voice signal, i.e., for performing an additional encryption in addition to the encryption ensured with the one-time key.

Those of skill would further appreciate that any of the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been generally described above in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

### List of references

- 1: Handset
- 10: Microphone of the handset
- 2: Basis station
- 3: Wireless headset
- 30: Microphone of the wireless headset
- 31: Loudspeaker of the wireless headset
- 32: Input/Output means
- 33: Microcontroller
- 330: Memory of the microcontroller
- 34: High frequency part (wireless transmitter)
- 340: Antenna
- 310: A/D D/A codec
- 4: Flash memory card for one-time key
- 40: Slot for flash memory card
- 8: Boolean circuit

## Claims

1. A wireless headset (3) comprising:
a microphone (30);
a loudspeaker (31);
a wireless transmitter (34) for the wireless transmission of signals;
an interface (40) for a memory (4) for storing one-time encryption key;
an encrypting part (8; 33) for encrypting voice signals before said wireless transmission using Boolean combinations of said voice signal (S) with said one-time encryption key (K), each bit of the one-time encryption key being used at most one time.

2. The headset of claim 1, said memory (4) being a removable Flash memory card.

3. The headset of claim 2, said removable Flash memory card storing one or several one-time encryption keys.

4. The headset of one of the claims 2 or 3, said encrypting part (8; 33) performing a Boolean combination between each bit of the voice signal (S) and a different bit of said one-time encryption key (K).

5. The headset of one of the claims 1 to 4, comprising a memory 4; 330) for storing information about the next bit of the one-time encryption key (K) to use.

6. The headset of one of the claims 1 to 5, further comprising a decrypting part (8; 33) for decrypting signals received by said wireless transmitter (34), said decrypting part using a one-time key (K) stored in said memory (4).

7. The headset of one of the claims 1 to 6, said wireless transmitter (34) being a Bluetooth transmitter.

8. The headset of one of the claims 1 to 7, wherein the headset (3) is an earpiece type headset, for example an earbud-type or earclip type headset.

9. The headset of one of the claims 1 to 8, comprising an additional encrypting part for encrypting said voice signals with a symmetric or asymmetric key.

10. The headset of claim 9, the two encrypting parts being arranged for performing a double encryption of said voice signal (S).

11. The headset of claim 9, said additional encrypting part being arranged for encrypting said voice signal (S) when said one-time encryption key has been entirely used.

12. A method for the encryption of voice signals (S) between a wireless headset (3) and an external device, comprising:
providing a voice signal (S);
providing a memory (4) with a one-time encryption key (K);
combining said voice signal and said one-time encryption key to compute an encrypted signal (S_{c}), wherein each bit of said one-time encryption key is used at most one time during encryption;
transmitting said encrypted signal.

13. The method of claim 12, said memory (4) being a removable Flash memory card.

14. The method of claim 13, said removable Flash memory card storing one or several one-time encryption keys.

15. The method of one of the claims 12 to 14, comprising a step of Boolean combining each bit of the voice signal (S) and a different bit of said one-time encryption key (K).

16. The method of one of the claims 12 to 15, comprising marking the bits of said encryption key (K) which have been used for encryption.

17. The method of one of the claims 12 to 16, further comprising:
defining groups of bits of the key (K), each group comprising more than one bit,
marking a group of bits of the key as used if at least one bit (Kᵢ) in the group has been used for encryption.

18. The method of one of the claims 12 to 17, further comprising decrypting received signals using a one-time key stored in said memory (4).

19. The method of one of the claims 12 to 18, said encrypted signal (S_{c}) being transmitted over a Bluetooth interface.

20. The method of claim 19, said additional encryption algorithm being used instead of encryption based on said one-time encryption key when said one-time encryption key has been used.

21. The method of one of the claims 12 to 20, further comprising:
sending a message to a receiving party indicating the key (K) used for further encryption.

22. The method of one of the claims 12 to 21, further interrupting a voice communication when all bits of the one-time encryption key (K) have been used.

23. The method of one of the claims 12 to 22, further ordering a new one-time encryption key when all bits of the one-time encryption (K) have been used.

24. The method of one of the claims 12 to 23, further storing a plurality of one-time keys (K) for communication with a corresponding plurality of recipients.
